(19) **Europäisches Patentamt / European Patent Office / Office européen des brevets**

(11) **EP 4 311 221 A1**

(12) # EUROPEAN PATENT APPLICATION
published in accordance with Art. 153(4) EPC

(43) Date of publication:
**24.01.2024 Bulletin 2024/04**

(21) Application number: **21931712.0**

(22) Date of filing: **30.11.2021**

(51) International Patent Classification (IPC):
***H04N 5/232*** *(2006.01)*

(52) Cooperative Patent Classification (CPC):
**H04N 23/60**

(86) International application number:
**PCT/JP2021/043868**

(87) International publication number:
**WO 2022/195969 (22.09.2022 Gazette 2022/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.03.2021 US 202163162221 P**

(71) Applicant: **Sony Group Corporation**
**Tokyo 108-0075 (JP)**

(72) Inventors:
• **YAMAGUCHI, Yuya**
**Tokyo 108-0075 (JP)**
• **YAMANAKA, Daiki**
**Tokyo 108-0075 (JP)**

(74) Representative: **MFG Patentanwälte**
**Meyer-Wildhagen Meggle-Freund**
**Gerhard PartG mbB**
**Amalienstraße 62**
**80799 München (DE)**

(54) **INFORMATION PROCESSING DEVICE, INFORMATION PROCESSING METHOD, AND PROGRAM**

(57) [Object]
To more exactly synchronize clock times of a plurality of imaging apparatuses.
[Solving Means]
An information processing apparatus configured to synchronize, on the basis of speed information included in respective pieces of ranging information regarding moving objects corresponding to each other measured by a plurality of imaging apparatuses with use of light subjected to frequency continuous modulation, respective clock times of the plurality of imaging apparatuses.

**EP 4 311 221 A1**

FIG.4

**Description**

[Technical Field]

The present disclosure relates to an information processing apparatus, an information processing method, and a program.

[Background Art]

To capture an image of an object with use of a plurality of imaging apparatuses, clock times of clocks built in the plurality of imaging apparatuses are synchronized in some cases. For example, in integrating respective images captured by the plurality of imaging apparatuses to generate an image of a wider area, synchronization of the clock times of the plurality of captured images makes it possible to achieve a seamless integration of the respective captured images acquired by the plurality of imaging apparatuses. In addition, in sequentially switching images captured by a plurality of imaging apparatuses for live image streaming or the like, a genlock (generator locking) signal or the like is shared to cause scanning timings of the plurality of imaging apparatuses to be matched with each other to synchronize the clock times of the plurality of captured images.

Meanwhile, imaging apparatuses have usually been equipped with a variety of sensors in addition to an imaging element such as a CMOS image sensor. For example, equipping an imaging apparatus with a ranging apparatus is under consideration. A frequency modulated continuous wave (FMCW) LiDAR (Light Detection and Raging) has drawn attention as a ranging apparatus in recent years. The FMCW-LiDAR is able to measure a speed of an object by the Doppler effect as well as a distance to the object. For example, PTL 1 below discloses a technology causing a moving object to be extracted from an image on the basis of an instantaneous velocity distribution measured with use of an FMCW-LiDAR.

[Citation List]

[Patent Literature]

[PTL 1]
Japanese Patent Laid-Open No. 2019-135446

[Summary]

[Technical Problem]

For example, in a case where a genlock (generator locking) signal or the like is shared to cause scanning timings of a plurality of imaging apparatuses to be matched with each other to synchronize clock times of the plurality of imaging apparatuses, it is difficult to automatically cause delays (latencies) occurring during transmission of acquired captured images to coincide with each other. Thus, it is difficult to automatically synchronize the clock times of the respective captured images acquired by the plurality of imaging apparatuses.

Accordingly, the present disclosure proposes new and improved information processing apparatus, information processing method, and program that are able to more exactly synchronize clock times of a plurality of imaging apparatuses with use of a frequency modulated continuous wave ranging apparatus.

[Solution to Problem]

The present disclosure provides an information processing apparatus configured to synchronize, on the basis of speed information included in respective pieces of ranging information regarding moving objects corresponding to each other measured by a plurality of imaging apparatuses with use of light subjected to frequency continuous modulation, respective clock times of the plurality of imaging apparatuses.

The present disclosure also provides an information processing method including causing a calculation apparatus to synchronize, on the basis of speed information included in respective pieces of ranging information regarding moving objects corresponding to each other measured by a plurality of imaging apparatuses with use of light subjected to frequency continuous modulation, respective clock times of the plurality of imaging apparatuses.

The present disclosure further provides a program for causing a computer to function as an information processing apparatus configured to synchronize, on the basis of speed information included in respective pieces of ranging information regarding moving objects corresponding to each other measured by a plurality of imaging apparatuses with use of light subjected to frequency continuous modulation, respective clock times of the plurality of imaging apparatuses.

[Brief Description of Drawings]

[FIG. 1]

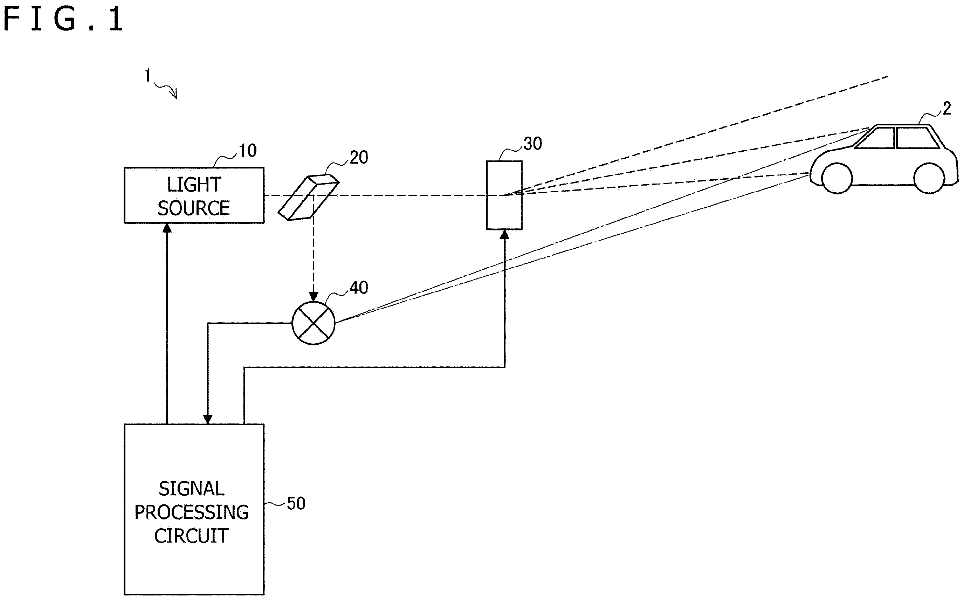

FIG. 1 is a diagram illustrating an outline of a frequency modulated continuous wave ranging apparatus.
[FIG. 2]

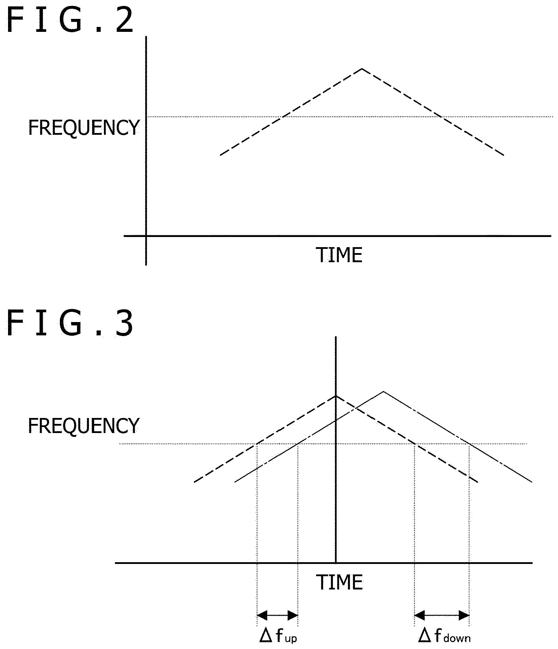

FIG. 2 is a graph schematically illustrating a change with time of a frequency of light outputted from the ranging apparatus to a subject.
[FIG. 3]
FIG. 3 is a graph schematically illustrating a change with time of the frequency of light received by the ranging apparatus after reflected by the subject.
[FIG. 4]

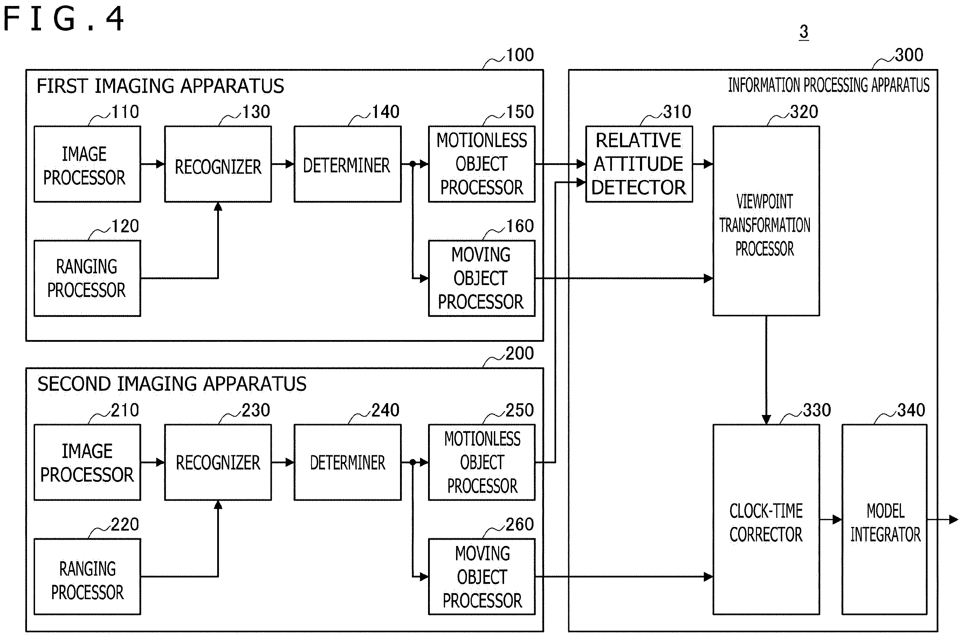

FIG. 4 is a block diagram illustrating a functional configuration of an information processing system according to a first embodiment of the present disclosure.
[FIG. 5]

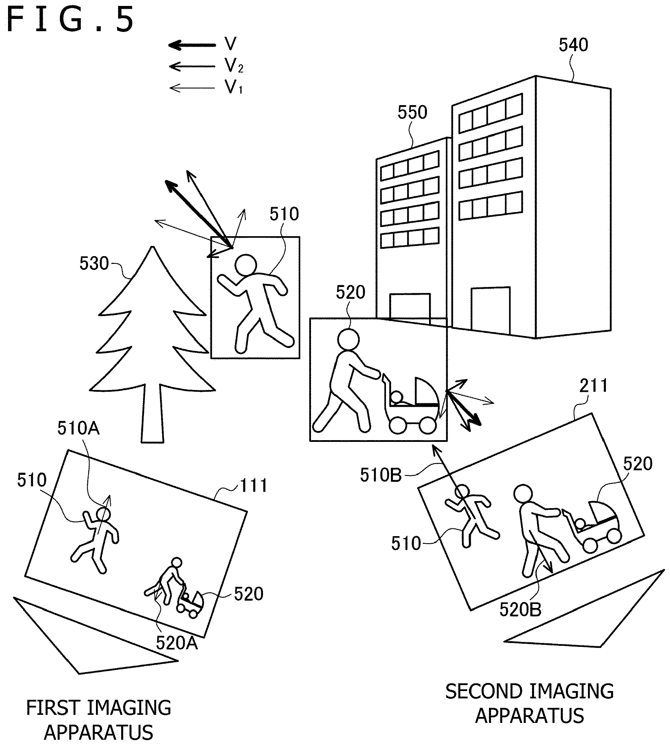

FIG. 5 is a schematic diagram for explaining an operation of a moving object processor.
[FIG. 6]

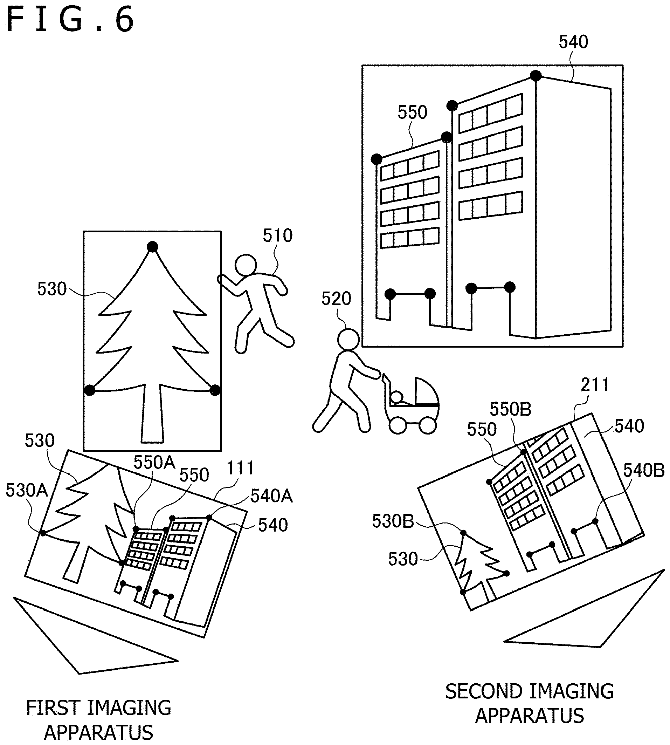

FIG. 6 is a schematic diagram for explaining an operation of a relative attitude detector.
[FIG. 7]

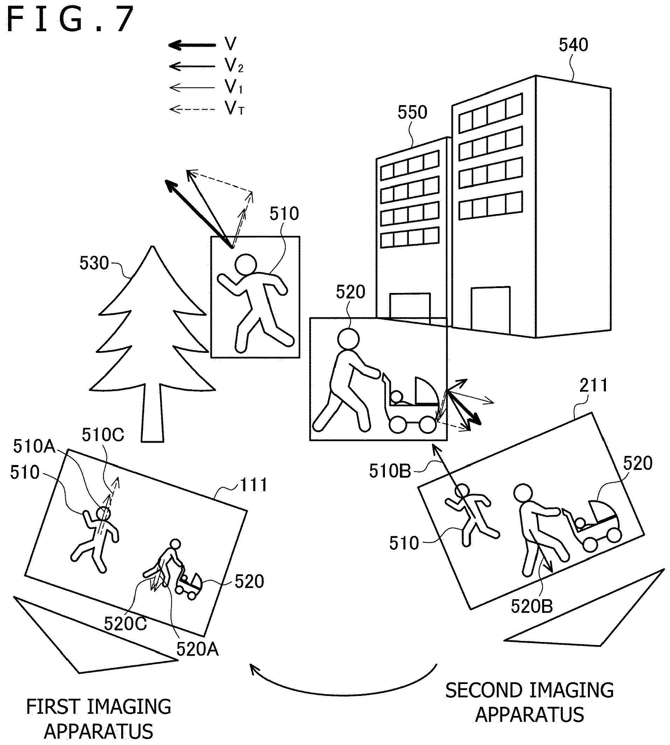

FIG. 7 is a schematic diagram for explaining an operation of a viewpoint changing processor.
[FIG. 8]

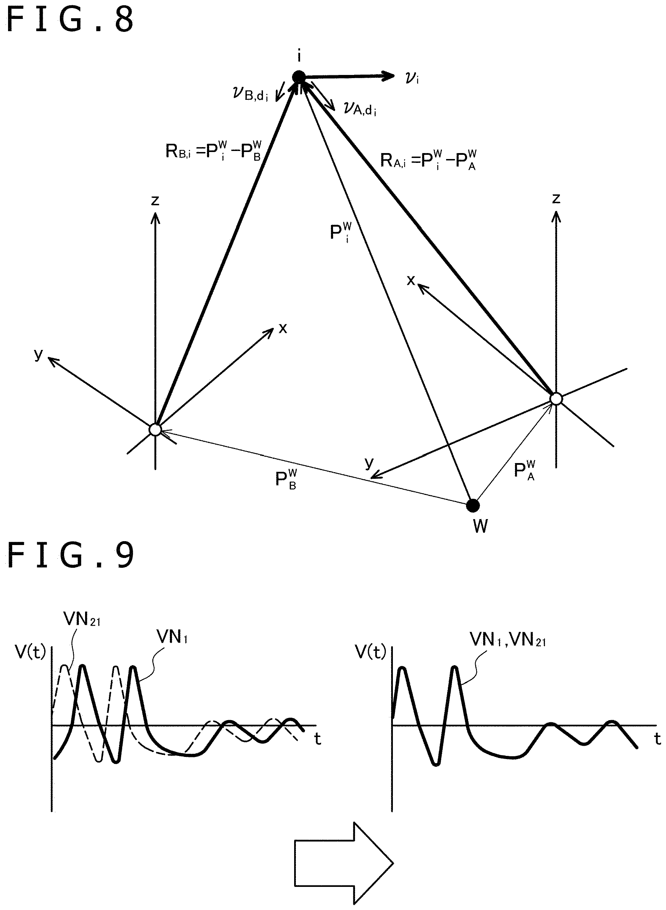

FIG. 8 is a graph for explaining speed estimation of a moving object.
[FIG. 9]
FIG. 9 is a graph for explaining an operation of a clock-time corrector.
[FIG. 10]

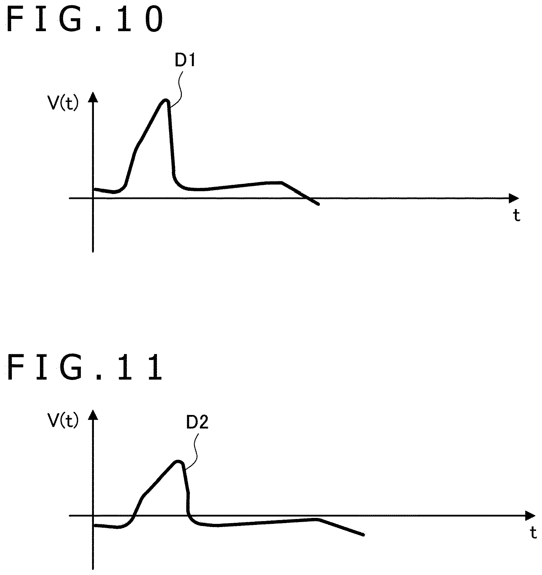

FIG. 10 is a graph illustrating a waveform of a speed change of a moving object detected by a ranging apparatus of a first imaging apparatus.
[FIG. 11]
FIG. 11 is a graph illustrating a waveform of a speed change of a moving object detected by a ranging apparatus of a second imaging apparatus.
[FIG. 12]

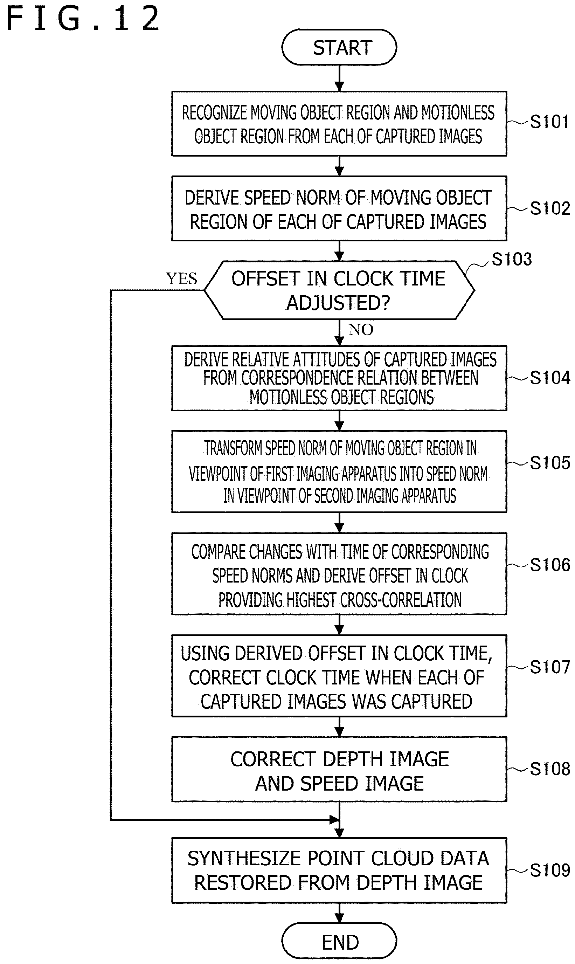

FIG. 12 is a flowchart for explaining an example of an operation of the information processing system according to the embodiment.
[FIG. 13]

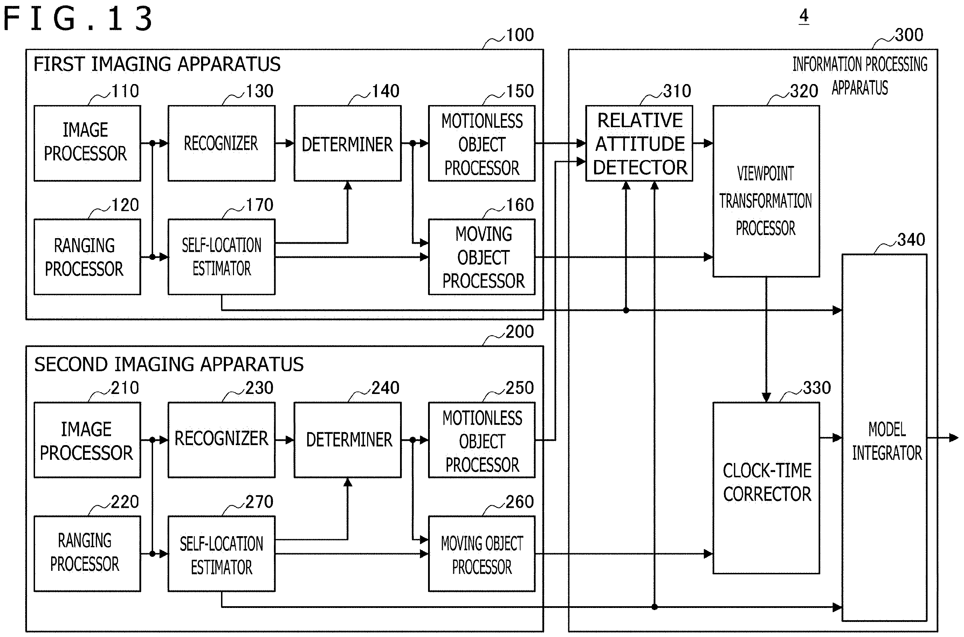

FIG. 13 is a block diagram illustrating a functional configuration of an information processing system according to a second embodiment of the present disclosure.
[FIG. 14]

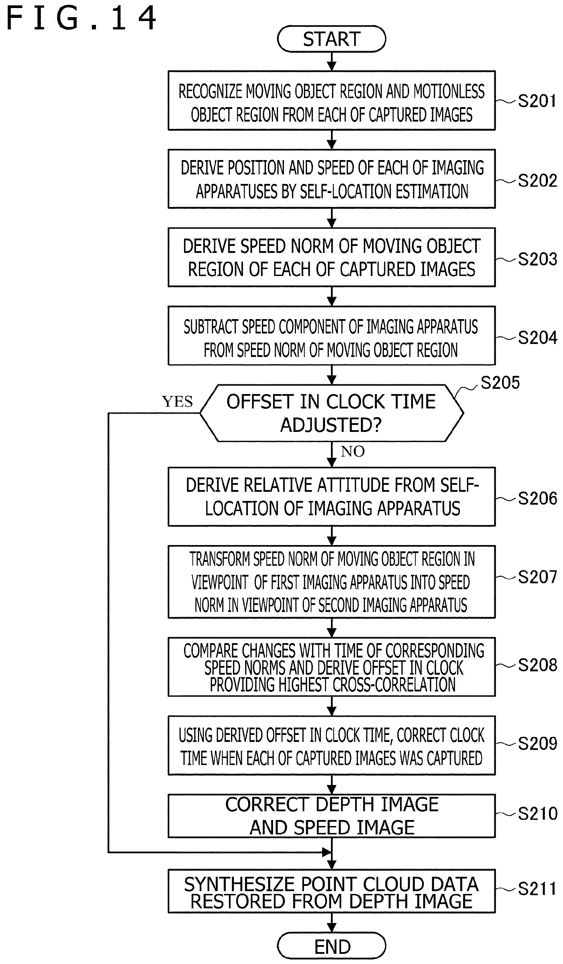

FIG. 14 is a flowchart for explaining an example of an operation of the information processing system according to the embodiment.
[FIG. 15]

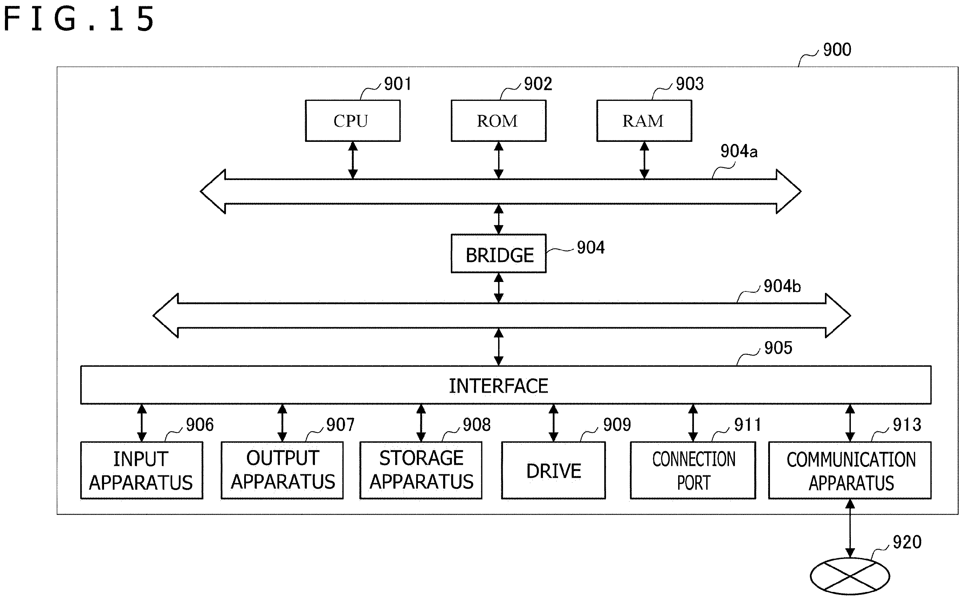

FIG. 15 is a block diagram illustrating a configuration example of a computer apparatus that is hardware of the information processing apparatus according to an embodiment of the present disclosure.

[Description of Embodiments]

A detailed description will be made below on preferred embodiments of the present disclosure with reference to the attached drawings. It should be noted that the same reference sign is used to refer to components having substantially the same functional configuration in the present specification and in the drawings and a redundant description is omitted, accordingly.
It should be noted that the description is made in the following order.

1. Background Art
1.1. Clock-Time Synchronization
1.2. Frequency Modulated Continuous Wave Ranging Apparatus
2. First Embodiment

2.1. Configuration Example
2.2. Operation Example
3. Second Embodiment
3.1. Configuration Example
3.2. Operation Example
4. Hardware
5. Conclusion

<1. Background Art>

(1.1. Clock-Time Synchronization)

First, description will be made on a background of a technology according to the present disclosure. For example, for live image streaming or the like, it is usual that a plurality of imaging apparatuses simultaneously performs recording and respective captured images acquired by the imaging apparatuses are integrated with use of equipment such as a switcher and delivered. In such a case, in order to prevent a black belt-shaped noise attributed to an offset in scanning timing from being contained at the time of switching the respective captured images acquired by the imaging apparatuses, it is necessary to synchronize clock times of the plurality of imaging apparatuses.

For example, a method referred to as genlock (generator locking) is used to synchronize scanning timings of a plurality of imaging apparatuses. According to the genlock, a predetermined genlock signal is inputted to each of the imaging apparatuses, and the genlock signal allows the respective horizontal and vertical scanning timings of the imaging apparatuses to be matched with each other.

In addition, a method referred to as time code synchronization is used to synchronize clock times of a plurality of imaging apparatuses. According to the time code synchronization, the plurality of imaging apparatuses is caused to capture images while a common time-code signal is inputted, which makes it possible to seamlessly switch captured images to which the common time-code signal is inputted.

However, as for the above-described genlock or time code synchronization, compatible imaging apparatuses are limited, and a plurality of imaging apparatuses is required to be physically connected and share a genlock signal or a time-code signal. Accordingly, a highly versatile technology to synchronize the clock times of a plurality of imaging apparatuses is demanded.

In addition, the respective captured images acquired by the imaging apparatuses would suffer occurrence of latency within the imaging apparatuses or latency during transfer of the captured images. As for the above-described genlock or time code synchronization, it is difficult to take such kinds of latency into consideration and, consequently, it is difficult to automatically completely synchronize the clock times of the captured images acquired by the plurality of imaging apparatuses.

The technology according to the present disclosure has been reached in view of the above-described circumstances. The technology according to the present disclosure is a technology using ranging information measured by a frequency modulated continuous wave (FMCW) ranging apparatus to detect an offset in clock time or an offset in cycle between a plurality of imaging apparatuses. The technology according to the present disclosure makes it possible to automatically synchronize the clock times of a plurality of imaging apparatuses without the necessity of visual adjustment.

In addition, the technology according to the present disclosure makes it possible to integrate captured images acquired by the plurality of imaging apparatuses, the clock times of which are synchronized, and ranging information to generate a highly accurate three-dimensional model of a moving object contained in the captured images.

(1.2. Frequency Modulated Continuous Wave Ranging Apparatus)

Subsequently, referring to FIG. 1 to FIG. 3, description will be made on a frequency modulated continuous wave ranging apparatus usable for the technology according to the present disclosure. FIG. 1 is a diagram illustrating an outline of the frequency modulated continuous wave ranging apparatus. FIG. 2 is a graph schematically illustrating a change with time of a frequency of light outputted from the ranging apparatus to a subject. FIG. 3 is a graph schematically illustrating a change with time of a frequency of light received by the ranging apparatus after reflected by the subject.

As illustrated in FIG. 1, a ranging apparatus 1 performs irradiation of a subject 2 with light outputted from a light source 10 such as a laser light source and receives a reflected light from the subject 2. The light outputted from the light source 10 is frequency-chirped light subjected to frequency continuous modulation through a signal processing circuit 50, or light with a frequency sequentially changing with time change. After being branched by a light splitter 20, the frequency-chirped light outputted from the light source 10 is scanned in a horizontal direction and a vertical direction by a two-dimensional scanner 30 and outputted to the subject 2. The frequency-chirped light outputted to the subject 2 is reflected by the subject 2 and then received by the ranging apparatus 1.

The reflected light received by the ranging apparatus 1 is mixed with the frequency-chirped light branched by the light splitter 20 before output through a light mixer 40, thus generating a beat signal. The signal processing circuit 50 is allowed to derive a distance between the ranging apparatus 1 and the subject 2 by analyzing the generated beat signal.

Specifically, as illustrated in FIG. 2 and FIG. 3, the reflected light received by the ranging apparatus 1 travels back and forth between the ranging apparatus 1 and the subject 2, which results in occurrence of a delay ( $\Delta f_{up}$ and $\Delta f_{down}$) in change with time of a frequency relative to the outputted light outputted from the ranging apparatus 1. Accordingly, the light mixer 40 mixes the outputted light branched by the light splitter 20 before output and the received reflected light, allowing for generation of a beat signal with a difference in frequency corresponding to the delay ( $\Delta f_{up}$ and $\Delta f_{down}$) between the outputted light and the reflected light. Thus, the ranging apparatus 1 is allowed to derive the distance between the ranging apparatus 1 and the subject 2 by causing the signal processing circuit 50 to perform FFT (Fast Fourier Transform) analysis of the beat signal, or the like.

In addition, a frequency of the reflected light received by the ranging apparatus 1 changes depending on a movement speed of the subject 2 by the Doppler effect. Specifically, the frequency of the reflected light reflected by the ranging apparatus 1 decreases with an increase in distance of the subject 2 from the ranging apparatus 1 and, inversely, increases with a decrease in distance of the subject 2 to the ranging apparatus 1. Accordingly, the ranging apparatus 1 is allowed to derive a speed of the subject 2 relative to the ranging apparatus 1 by measuring a change of the frequency of the reflected light relative to the frequency of the outputted light.

The light outputted from the light source 10 is, for example, infrared light or near infrared light. In other words, the ranging apparatus 1 may be a LiDAR (Light Detection and Raging). The frequency modulated continuous wave ranging apparatus may be exemplified by an FMCW-Radar (Radio Detection and Raging) using a millimeter wave in addition to an FMCW-LiDAR. Incidentally, since an FMCW-Radar has a low resolution for distance and direction as compared with an FMCW-LiDAR, an FMCW-LiDAR is suitable as the frequency modulated continuous wave ranging apparatus in the technology according to the present disclosure.

<2. First Embodiment>

(2.1. Configuration Example)

Now, referring to FIG. 4, description will be made on an information processing system according to a first embodiment of the present disclosure. FIG. 4 is a block diagram illustrating a functional configuration of an information processing system 3 according to the first embodiment of the present disclosure.

As illustrated in FIG. 4, the information processing system 3 according to the present embodiment includes a first imaging apparatus 100, a second imaging apparatus 200, and an information processing apparatus 300 that achieves clock-time synchronization between the first imaging apparatus 100 and the second imaging apparatus 200.

The first imaging apparatus 100 and the second imaging apparatus 200 each include an imaging element, such as a CMOS image sensor not illustrated and a ranging apparatus, such as an FMCW-LiDAR, not illustrated. The first imaging apparatus 100 and the second imaging apparatus 200 are allowed to cause the imaging elements to acquire captured images and cause the ranging apparatuses, which use light subjected to frequency continuous modulation, to acquire ranging information including a distance to the subject 2 (also referred to as a depth of the subject 2) and a speed of the subject 2.

The ranging information acquired by the ranging apparatuses may be expressed as what is generally called point cloud data. For example, the ranging information may be expressed as point cloud data in which points each including information regarding the speed of the subject 2 are plotted on a three-dimensional space, an origin of which is the ranging apparatus, on the basis of distance and orientation to the subject 2.

It should be noted that the imaging element and the ranging apparatus of each of the first imaging apparatus 100 and the second imaging apparatus 200 are each subjected to clock-time synchronization and allowed to synchronously perform imaging and measurement. In addition, the imaging element and the ranging apparatus are also subjected to calibration in terms of a positional relation and allowed to acquire captured images and ranging information regarding regions corresponding to each other.

Description will be made below by taking as an example a case where the information processing apparatus 300 synchronizes the clock time of the second imaging apparatus 200 with the clock time of the first imaging apparatus 100. Incidentally, the information processing apparatus 300 may synchronize the clock time of the first imaging apparatus 100 with the clock time of the second imaging apparatus 200 or may synchronize the clock times of two or more imaging apparatuses with the clock time of another imaging apparatus.

(First Imaging Apparatus 100, Second Imaging Apparatus 200)

The first imaging apparatus 100 includes an image processor 110, a ranging processor 120, a recognizer 130, a determiner 140, a motionless object processor 150, and a moving object processor 160. Likewise, the second imaging apparatus 200 includes an image processor 210, a ranging processor 220, a recognizer 230, a determiner 240, a motionless object processor 250, and a moving object processor 260. The first imaging apparatus 100 and the second imaging apparatus 200 are substantially the same; therefore, description will be made below only on components of the first imaging apparatus 100 and description on components of the second imaging apparatus 200 will be omitted.

The image processor 110 applies image processing to a captured image acquired by the imaging element such as a CMOS image sensor. Specifically, the image processor 110 performs exposure (light-exposure) adjustment, white-balance adjustment, or the like for the captured image to adjust the appearance of the captured image looks. The image processor 110 then outputs the captured image in a form of an RGB color image by applying a development process to the captured image.

The ranging processor 120 generates a depth image and a speed image by projecting the ranging information, which includes the distance to the subject 2 (the depth of the subject 2) and the speed of the subject 2 acquired by the ranging apparatus such as an FMCW-LiDAR, onto the captured image. Specifically, the ranging processor 120 generates a depth image coaxial with the captured image by projecting the distance to the subject 2 (the depth of the subject 2) acquired by the ranging apparatus onto the captured image. In addition, the ranging processor 120 generates a speed image coaxial with the captured image by projecting the speed of the subject 2 acquired by the ranging apparatus onto the captured image.

The recognizer 130 detects an object region where an object exists from the captured image outputted from the image processor 110 and the depth image and the speed image generated by the ranging processor 120. By way of example, the recognizer 130 may detect the object region where the object exists from the captured image by performing image recognition with use of a model constructed by machine learning such as a convolutional neural network (CNN). By way of another example, the recognizer 130 may detect the object region where the object exists by recognizing a region existing at a similar depth from the depth image or a region moving at a similar speed from the speed image.

The determiner 140 determines whether each object region detected by the recognizer 130 is a moving object region or a motionless object region. The moving object region is a region where a moving object that is moving or likely to move exists. The motionless object region is a region where a motionless object that is not moving or highly unlikely to move exists.

By way of example, the determiner 140 may determine whether each object region is a moving object region or a motionless object region on the basis of whether or not the speed detected in the object region is attributed to a motion of the first imaging apparatus 100. For example, in a case where the first imaging apparatus 100 remains still, the determiner 140 may determine a region with a speed as a moving object region and a region without a speed as a motionless object region.

By way of another example, the determiner 140 may determine whether each object region is a moving object region or a motionless object region on the basis of image recognition using a model constructed by machine learning such as a convolutional neural network. For example, the determiner 140 may determine a region where an object recognized as being likely to move exists as a moving object region on the basis of image recognition. In addition, the determiner 140 may determine a region where an object recognized as being unlikely to move exists as a motionless object region on the basis of image recognition.

The motionless object processor 150 extracts a feature point in the motionless object region of the captured image and acquires a depth of the extracted feature point. In a case where a depth of the extracted feature point is not measured by the ranging apparatus, the motionless object processor 150 may acquire the depth of the feature point by applying an interpolation process to the depth image. A feature point to be extracted may be a corner of a contour of a motionless object existing in the motionless object region, or the like.

The moving object processor 160 averages, in a moving object region of the speed image, a speed measured within the moving object region to derive a representative speed norm of the moving object region. Alternatively, the moving object processor 160 may weight and then average a speed measured within a moving object region to derive a representative speed norm of the moving object region.

Likewise, the components of the second imaging apparatus 200 also perform the above-described operations to detect a motionless object region and a moving object region. In addition, a depth of a feature point in the motionless object region and a representative speed norm of the moving object region are derived.

Referring to FIG. 5, a further description will be made on the operation of the moving object processors 160 and 260. FIG. 5 is a schematic diagram for explaining the operation of the moving object processors 160 and 260.

As illustrated in FIG. 5, it is assumed that pedestrians 510 and 520, a roadside tree 530, and buildings 540 and 550 are present as subjects in an outside world. The first imaging apparatus 100 and the second imaging apparatus 200 each recognize the pedestrians 510 and 520 as moving objects and recognize the roadside tree 530 and the buildings 540 and 550 as motionless objects.

In the first imaging apparatus 100, the moving object processor 160 is allowed to derive a representative speed norm 510A from a moving object region including the pedestrian 510 on a captured image 111 by averaging a speed. In addition, the moving object processor 160 is allowed to derive a representative speed norm 520A from a moving object region including the pedestrian 520 on the captured image 111 by averaging a speed. The representative speed norms 510A and 520A are each a speed component $V_1$ in a direction perpendicular to an imaging plane of the first imaging apparatus 100 among a true speed V of the moving object. Since the ranging apparatus using light subjected to frequency continuous modulation measures a speed by the Doppler effect, a speed of a speed component on a plane at an equal distance from the ranging apparatus is not detected but merely a speed in a direction to approach or move away from the ranging apparatus is detected.

Likewise, in the second imaging apparatus 200, the moving object processor 260 is allowed to derive a representative speed norm 510B from a moving object region including the pedestrian 510 on a captured image 211 by averaging a speed. In addition, the moving object processor 260 is allowed to derive a representative speed norm 520B from a moving object region including the pedestrian 520 on the captured image 211 by averaging a speed. The representative speed norms 510B and 520B are each a speed component $V_2$ in a direction perpendicular to an imaging plane of the second imaging apparatus 200 among a true speed V of the moving object. Since the ranging apparatus using light subjected to frequency continuous modulation measures a speed by the Doppler effect, a speed component on a plane at an equal distance from the ranging apparatus is not detected but merely a speed in a direction to approach or move away from the ranging apparatus is detected.

(Information Processing Apparatus 300)

The information processing apparatus 300 includes a relative attitude detector 310, a viewpoint transformation processor 320, a clock-time corrector 330, and a model integrator 340.

The relative attitude detector 310 derives relative attitudes of the first imaging apparatus 100 and the second imaging apparatus 200. Specifically, the relative attitude detector 310 derives the relative attitudes of the first imaging apparatus 100 and the second imaging apparatus 200 on the basis of a correspondence relation between motionless object regions of the captured images acquired by each of the first imaging apparatus 100 and the second imaging apparatus 200.

Specifically, the relative attitude detector 310 first derives, on the basis of similarity between neighborhoods of feature points of the respective motionless object regions of the captured images, a correspondence relation between the respective feature points of the captured images. Subsequently, the relative attitude detector 310 may derive the relative attitudes of the first imaging apparatus 100 and the second imaging apparatus 200 on the basis of coordinates of the respective feature points of the captured images and a correspondence relation between depths of the feature points.

Referring to FIG. 6, a further description will be made on the operation of the relative attitude detector 310. FIG. 6 is a schematic diagram for explaining the operation of the relative attitude detector 310.

As illustrated in FIG. 6, it is assumed that the pedestrians 510 and 520, the roadside tree 530, and the buildings 540 and 550 are present as subjects in the outside world. The first imaging apparatus 100 and the second imaging apparatus 200 each recognize the pedestrians 510 and 520 as moving objects and recognize the roadside tree 530 and the buildings 540 and 550 as motionless objects.

The relative attitude detector 310 first derives a correspondence relation between feature points 530A, 540A, and 550A of the roadside tree 530 and the buildings 540 and 550 of the captured image 111 and feature points 530B, 540B, and 550B of the roadside tree 530 and the buildings 540 and 550 of the captured image 211 on the basis of similarity between neighborhoods of the feature points, or the like. Subsequently, the relative attitude detector 310 is allowed to derive the relative attitudes of the first imaging apparatus 100 and the second imaging apparatus 200 on the basis of correspondence relations between coordinates and depths of each of the feature points 530A, 540A, and 550A and coordinates and depths of corresponding one of the feature points 530B, 540B, and 550B.

In more details, the relative attitude detector 310 first performs, for each of the captured images, detection of a feature amount using a Harris operator or extraction of a feature amount with a descriptor such as SITF (Scale Invariant Feature Transform) or SURF (Speeded Up Robust Features).

Next, the relative attitude detector 310 derives corresponding points (feature points) with the matched feature amount by, for example, searching each of the captured images with the aid of even information regarding rough installation positions of the first imaging apparatus 100 and the second imaging apparatus 200, and the like. Alternatively, the relative attitude detector 310 derives the corresponding points (feature points) by searching over the captured images by template matching such as SAD (Sum of Absolute Difference) or NCC (Normalized Cross-Correlation).

Subsequently, the relative attitude detector 310 derives the depths of the derived feature points from the depth images by performing interpolation or the like. Further, the relative attitude detector 310 is allowed to derive the relative attitudes of the first imaging apparatus 100 and the second imaging apparatus 200 with use of the coordinates and depths of corresponding ones of the respective feature points of the captured images and respective camera parameters of the first imaging apparatus 100 and the second imaging apparatus 200. The derivation of the relative attitudes with use of these pieces of information, which is what is generally called a PnP (Perspective-n-Point) matter, is solvable by a known method such as a DLT (Direct Linear Transform) method or an EPnP (Efficient PnP) method.

The viewpoint transformation processor 320 verifies the correspondence relation between the respective moving object regions in the captured images on the basis of the relative attitudes derived by the relative attitude detector 310 and the coordinates and depths of the moving object regions. Next, the viewpoint transformation processor 320 transforms the representative speed norm of the moving object region in one of the captured images into the representative speed norm of the moving object region in the other captured image. In other words, the viewpoint transformation processor 320 transforms the representative speed norms of corresponding ones of the respective moving object regions in the captured images into representative speed norms as viewed from the same viewpoint.

Referring to FIG. 7, a further description will be made on the operation of the viewpoint transformation processor 320. FIG. 7 is a schematic diagram for explaining the operation of the viewpoint transformation processor 320.

As illustrated in FIG. 7, it is assumed that the pedestrians 510 and 520, the roadside tree 530, and the buildings 540 and 550 are present as subjects in the outside world. The first imaging apparatus 100 and the second imaging apparatus 200 each recognize the pedestrians 510 and 520 as moving objects and recognize the roadside tree 530 and the buildings 540 and 550 as motionless objects.

Specifically, the viewpoint transformation processor 320 estimates a moving object region including the pedestrians 510 and 520 in the captured image 111 on the basis of the relative attitudes derived by the relative attitude detector 310 and the coordinates and depths of the pedestrians 510 and 520 in the captured image 211 to verify the correspondence relation between the moving object regions. Then, the viewpoint transformation processor 320 transforms the representative speed norm 510B in the captured image 211 of the moving object region including the pedestrian 510 into a representative speed norm 510C in the captured image 111 with use of the relative attitudes of the first imaging apparatus 100 and the second imaging apparatus 200. The viewpoint transformation processor 320 also transforms the representative speed norm 520B in the captured image 211 of the moving object region including the pedestrian 520 into a representative speed norm 520C in the captured image 111 with use of the relative attitudes of the first imaging apparatus 100 and the second imaging apparatus 200. For example, the viewpoint transformation processor 320 may derive the representative speed norms 510C and 520C by deriving inner products of an optical axis direction of the first imaging apparatus 100 and the representative speed norms 510B and 520B of the captured image 211 with use of the relative attitudes of the first imaging apparatus 100 and the second imaging apparatus 200.

In more details, the viewpoint transformation processor 320 first identifies respective moving objects in a captured image acquired by the first imaging apparatus 100 and a captured image acquired by the second imaging apparatus 200, the moving objects corresponding to each other. By way of example, the viewpoint transformation processor 320 is allowed to detect the moving objects corresponding to each other on the basis of whether or not the feature amount of the captured image acquired by the first imaging apparatus 100 and the feature amount of the captured image acquired by the second imaging apparatus 200 are matched with each other. By way of another example, the viewpoint transformation processor 320 is allowed to detect, as the moving objects corresponding to each other, moving objects that are matched with each other in semantic label or feature amount in the captured image acquired by the first imaging apparatus 100 and the captured image acquired by the second imaging apparatus 200 by, for example, image recognition with use of CNN or the like. This makes it possible for the viewpoint transformation processor 320 to set the respective moving objects having the matched feature amount in the captured image acquired by the first imaging apparatus 100 and the captured image acquired by the second imaging apparatus 200 as candidates to track for the moving objects corresponding to each other.

For example, Yolo, SSD, M2Det, or the like, which is a CNN for object detection, is usable as the CNN used for the above-described image recognition. Incidentally, the CNN may learn again according to a use environment, and the correspondence relation may be verified by use of an output from an intermediate layer.

Here, the ranging apparatus acquires point cloud data including information regarding a speed; therefore, in a case where the first imaging apparatus 100 and the second imaging apparatus 200 remain still, only a point cloud of a moving object region has a speed component. In such a case, the viewpoint transformation processor 320 is allowed to acquire a three-dimensional coordinate of a centroid of a moving object from a representative angle and a depth of a moving object region by clustering the point cloud having the speed component on a unit sphere. Thus, the viewpoint transformation processor 320 is allowed to derive a three-dimensional coordinate of the moving object as viewed from the first imaging apparatus 100 by, for example, performing a coordinate transformation of the three-dimensional coordinate of the moving object acquired in the second imaging apparatus 200 with use of the relative attitudes of the first imaging apparatus 100 and the second imaging apparatus 200.

Thus, in a case where a three-dimensional coordinate resulting from the coordinate transformation of the three-dimensional coordinate of the moving object acquired in the second imaging apparatus 200 is sufficiently close to the three-dimensional coordinate of the same moving object acquired in the first imaging apparatus 100, the viewpoint transformation processor 320 is allowed to identify that both moving objects are in common to each other.

The viewpoint transformation processor 320 is allowed to highly accurately determine a correspondence relation between moving object regions in captured images acquired by a plurality of imaging apparatuses by virtue of a combination of the above-described matching verification of the moving object regions according to the feature amounts of the captured images and matching verification of the moving object regions by comparison of the three-dimensional coordinates of the centroids of the moving objects. This makes it possible for the viewpoint transformation processor 320 to highly accurately recognize a moving object with a complicated motion that may stop after moving or start moving from a stopped state.

Such identification processes are performed for each frame of a captured image, which makes it possible to extract the representative speed norm and representative three-dimensional coordinate of a moving object in each frame. The representative speed norm and the representative three-dimensional coordinate are associated with the representative speed norm and representative three-dimensional coordinate of the moving object detected in the next frame, respectively, thereby making it possible to continuously track the common moving object. In addition, it is also possible to detect a rough direction of a speed vector of the moving object from the representative three-dimensional coordinate of the moving object detected in each frame.

For example, a representative speed of a moving object detected by each ranging apparatus can be transformed as indicated in following Table 1, Expression Group 1, and FIG. 8 and thus the speed of the moving object can be estimated by use of them. FIG. 8 is a graph for explaining speed estimation of a moving object. Incidentally, in a case where the direction of the speed vector of a moving object is orthogonal to a line-of-sight direction of the ranging apparatus, a detected value of the speed of the moving object becomes unstable. Accordingly, it is desirable that such a moving object be excluded from this estimation.

[Table 1]

(Table 1)

| Constant | Unit | |
|---|---|---|
| $\boldsymbol{R_i}$ | m | Position vector of detection point (i) (origin of ranging coordinate system) |
| $\boldsymbol{v_i}$ | m/s | Speed vector of detection point (i) |
| $\boldsymbol{R_i}$ | m | Distance of detection point (i) |
| $\boldsymbol{V_{di}}$ | m/s | Doppler speed of detection point (i) |
| $\boldsymbol{P_i^W}$ | m | Position vector of detection point (i) |
| $\boldsymbol{P_L^W}$ | m | Position vector of LiDAR |

[Math. 1]

(Expression Group 1)

$$v_{A,d_i} = \frac{\boldsymbol{R}_{A,i}}{R_{A,i}} \cdot \boldsymbol{v}_i = \frac{\boldsymbol{R}_{A,i}}{R_{A,i}} |\boldsymbol{v}_i| \cos\theta_{i,A}$$

$$v_{B,d_i} = \frac{\boldsymbol{R}_{B,i}}{R_{B,i}} \cdot \boldsymbol{v}_i = \frac{\boldsymbol{R}_{B,i}}{R_{B,i}} |\boldsymbol{v}_i| \cos\theta_{i,B}$$

$$|\widehat{\boldsymbol{v}_i}| = \frac{|v_{A,d_i}|}{\cos\theta_{i,A}} \quad : \text{Estimated speed norm of moving object}$$

$$|\widehat{\boldsymbol{v}_i}| = \frac{|v_{B,d_i}|}{\cos\theta_{i,B}} \quad : \text{Estimated speed norm of moving object}$$

The viewpoint transformation processor 320 is allowed to specify a common moving object by associating the speed norm of the moving object estimated as described above with the speed norm of the moving object detected in the next frame. In addition, the information processing apparatus 300 is allowed to detect an offset in clock time of each of the imaging apparatuses by transforming the speed norms of the moving objects estimated as described above into speed norms as viewed in the same viewpoint and comparing them.

It should be noted that in Expression Group 1 above, $\theta_{i,A}$ is an angle made between $v_i$ (vector) and $R_{A,i}$ (vector) and $\theta_{i,B}$ is an angle made between $v_i$ (vector) and $R_{B,i}$ (vector) . $\theta_{i,A}$ and $\theta_{i,B}$ are derivable from respective representative three-dimensional coordinates of the moving objects detected in individual frames.

The clock-time corrector 330 detects an offset in clock time by comparing a representative speed norm of a moving object region in one of captured images with a representative speed norm of a moving object region in the other captured image, the representative speed norm of the latter being transformed into a representative speed norm as viewed from the same viewpoint as that of the one of the imaging apparatuses. In other words, the clock-time corrector 330 detects an offset in clock time of each of the imaging apparatuses by comparing the representative speed norms of respective moving object regions in captured images as viewed from the same viewpoint, the moving object regions corresponding to each other.

Referring to FIG. 9, a further description will be made on the operation of the clock-time corrector 330. FIG. 9 is a graph for explaining the operation of the clock-time corrector 330.

First, it is assumed that respective moving object regions are detected in a captured image acquired by the first imaging apparatus 100 and a captured image acquired by the second imaging apparatus 200, the moving object regions corresponding to each other. In FIG. 9, a representative speed norm as viewed in a viewpoint of the first imaging apparatus and that is transformed from the representative speed norm of the moving object region acquired by the second imaging apparatus 200 is represented by a waveform $VN_{21}$, and the representative speed norm of the moving object region acquired by the first imaging apparatus 100 is represented by a waveform $VN_1$.

The waveforms $VN_1$ and $VN_{21}$ are supposed to basically matched with each other, since changes with clock time of the representative speed norms of the corresponding moving object regions are seen from the same viewpoint. However, the waveform $VN_1$ and the waveform $VN_{21}$, which are acquired by the imaging apparatuses different from each other, have an offset caused due to an offset in clock time between the first imaging apparatus 100 and the second imaging apparatus 200. Accordingly, the clock-time corrector 330 detects an offset in clock time or an offset in cycle between the waveforms $VN_1$ and $VN_{21}$ and corrects the clock time of the second imaging apparatus 200 on the basis of the detected offset in clock time or offset in cycle, allowing the clock times of the first imaging apparatus 100 and the second imaging apparatus 200 to be synchronized.

A more detailed description will be made on a method for the clock-time corrector 330 to compare the representative speed norms. FIG. 10 is a graph illustrating a waveform D1 of a speed change of a moving object detected by the ranging apparatus of the first imaging apparatus 100. FIG. 11 is a graph illustrating a waveform D2 of a speed change of a moving object detected by the ranging apparatus of the second imaging apparatus 200. Incidentally, the speed changes represented by the waveforms D1 and D2 are speed changes of the same moving object and transformed into speed changes as viewed from the same viewpoint through the process performed by the viewpoint transformation processor 320.

The speeds of the moving objects are measured by the ranging apparatuses for each frame of respective images captured by the first imaging apparatus 100 and the second imaging apparatus 200 and thus provided as numerical values discrete in a time direction. Accordingly, in order to detect an offset in clock time with a high accuracy in a shorter time than an interval for sampling frames of a captured image, it is desirable that the speeds of the moving objects measured by the ranging apparatuses be subjected to an interpolation process in the time direction. In addition, in a case where a plurality of moving objects is detected by each of the first imaging apparatus 100 and the second imaging apparatus 200, a temporal change of a speed may be extracted for each of the plurality of moving objects.

In a case where clock signals, which determine a timing for ranging, are not synchronized between the ranging apparatus of the first imaging apparatus 100 and the ranging apparatus of the second imaging apparatus 200, the waveforms D1 and D2 of the speed changes of the moving objects fail to be synchronized, resulting in an offset in clock time or a time-directional offset in scale. Accordingly, the clock-time corrector 330 first detects an offset in clock time or a time-directional offset in scale by obtaining a cross-correlation between the waveforms D1 and D2. For example, normalized cross-correlation (NCC) as represented by Equation 2 below or the like is usable as a method of obtaining the cross-correlation.

[Math. 2]

(Expression 2)

$$I_{NCC}(x) = \frac{\sum_{\xi=1}^{m}\left(f_A(\xi - x) - \bar{f}_A\right)\left(f_B(\xi) - \bar{f}_B\right)}{\sqrt{\sum_{\xi=1}^{m}\left(f_A(\xi - x) - \bar{f}_A\right)^2}\sqrt{\sum_{\xi=1}^{m}\left(f_B(\xi - x) - \bar{f}_B\right)^2}}$$

Specifically, the clock-time corrector 330 first obtains cross-correlations between the waveform D1 and the waveform D2 at slightly different times along the waveform D1 to derive an offset in clock time providing the highest cross-correlation. Next, the clock-time corrector 330 changes a time-directional scale of the waveform D1 and obtains cross-correlations between the waveform D1 and the waveform D2 at slightly different times as described above to derive a scale providing the highest cross-correlation. As a result of repeating the above, the clock-time corrector 330 is allowed to derive the offset in clock time and the scale providing the highest cross-correlation.

A moving object a speed change of which is to be used for obtaining the above-described offset in clock time and time-directional offset in scale may be selected as long as the moving object complies with conditions: a certain amount of speed change exists (i.e., a dispersion of the speed change is equal to or more than a threshold); and a direction of the speed change equal to or more than the threshold is orthogonal to neither of the line-of-sight directions of the first imaging apparatus 100 and the second imaging apparatus 200. For example, the clock-time corrector 330 may derive neither of an offset in clock time and a time-directional offset in scale until the appearance of a moving object where a speed change equal to or more than the threshold exists in a direction orthogonal to neither of the line-of-sight directions of the first imaging apparatus 100 and the second imaging apparatus 200.

The clock-time corrector 330 derives an offset in clock time and a time-directional offset in scale for each of waveforms of the speed change of a moving object satisfying such conditions and performs weighted averaging where a moving object with a larger dispersion of speed is more weighted, allowing for deriving an offset in clock time and an offset in scale. The clock-time corrector 330 may further reflect the derived offset in clock time and offset in scale described above and then obtain again a cross-correlation between moving objects to further enhance an accuracy of correction of the offset in clock time and the offset in scale.

After correcting the captured image, the depth image, and the speed image acquired by one of the imaging apparatuses on the basis of the offset in clock time and the offset in scale derived by the clock-time corrector 330, the model integrator 340 integrates the respective captured images, depth images, and speed images acquired by the imaging apparatuses.

Specifically, the model integrator 340 first corrects, for example, the clock time of the second imaging apparatus 200 on the basis of the offset in clock time and the offset in scale derived by the clock-time corrector 330. Next, the model integrator 340 selects a clock time closest to a clock time when the first imaging apparatus 100 performs imaging from among depth images acquired by the second imaging apparatus 200 and corrects a depth image at the selected clock time with a change corresponding to a difference in clock time. It should be noted that the change corresponding to the difference in clock time can be approximated with use of a speed of the speed image.

Then, the model integrator 340 synthesizes point cloud data restored from the depth image acquired by the first imaging apparatus 100 and corrected point cloud data acquired by the second imaging apparatus 200. Here, the corrected point cloud data acquired by the second imaging apparatus 200 is point cloud data restored from the depth image corrected by the model integrator 340 after transformed as viewed from the viewpoint of the first imaging apparatus 100 in accordance with the relative attitudes of the first imaging apparatus 100 and the second imaging apparatus 200.

This makes it possible for the model integrator 340 to generate a highly accurate surface of the synthesized point cloud data by applying a method such as shape reconstruction with use of Poisson's equation (Poisson Surface Reconstruction) to the synthesized point cloud data.

It should be noted that, in synthesizing a plurality of pieces of point cloud data, the model integrator 340 is also able to further correct an offset in clock time, an offset in position, or the like between the first imaging apparatus 100 and the second imaging apparatus 200 with use of a technique such as ICP (Iterative Closest Point). In such a case, the model integrator 340 is able to further enhance an accuracy of the synthesized point cloud data. In addition, in a case where it is possible to perform a process with a higher accuracy such as offline, the model integrator 340 is also able to generate point cloud data with a much higher accuracy by performing a process such as Dynamic Fusion.

For, for example, live image streaming or the like, the information processing system 3 according to the present embodiment derives an offset in clock time of each of imaging apparatuses that perform shooting and thus is able to correct the offset in clock time in advance. In such a case, the information processing system 3 is able to skip a process to set, the respective clock times of the imaging apparatuses that perform shooting before actual live image streaming.

In addition, the information processing system 3 according to the present embodiment, which is able to perform clock-time synchronization from captured images, is allowed to synchronize captured images acquired by separate imaging apparatuses in terms of clock time later and integrate the captured images. For example, the information processing system 3 is able to synthesize captured image data from a surveillance camera on a scene where a vehicle accident occurred and captured image data from a dashboard camera in a vehicle that caused the accident after clock-time synchronization, thus recreating a three-dimensional model of the vehicle at the time of the occurrence of the vehicle accident. Imaging apparatuses such as a surveillance camera and a dashboard camera are unlikely to be synchronized in terms of clock time in advance. The information processing system 3, which is able to detect an offset in clock time from a captured image, a depth image, and a speed image, allows the captured image, the depth image, and the speed image to be integrated by correcting the offset in clock time later.

It should be noted that the technology according to the present disclosure is intended to correct slight offset in clock time and offset in cycle. Accordingly, it is desirable that respective clock times of imaging apparatuses be roughly set with use of a clock time such as UTC (Coordinated Universal Time).

(2.2. Operation Example)

Now, referring to FIG. 12, description will be made on an operation example of the information processing system 3 according to the present embodiment. FIG. 12 is a flowchart for explaining an example of an operation of the information processing system 3 according to the present embodiment. Description will be made below by taking as an example a case where the information processing apparatus 300 synchronizes the clock time of the second imaging apparatus 200 with the clock time of the first imaging apparatus 100.

As illustrated in FIG. 12, the recognizers 130 and 230 and the determiners 140 and 240 individually recognize moving object regions and motionless object regions from captured images, depth images, and speed images acquired by each of the first imaging apparatus 100 and the second imaging apparatus 200 (S101). Specifically, the recognizers 130 and 230 individually recognize regions including objects from captured images, depth images, and speed images acquired by each of the first imaging apparatus 100 and the second imaging apparatus 200. Subsequently, the determiners 140 and 240 each determine whether the recognized region is a moving object region including a moving object or a motionless object region including a motionless object.

Subsequently, the moving object processors 160 and 260 each derive a representative speed norm of the moving object region (S102). Specifically, the moving object processors 160 and 260 each average a speed measured within the moving object region in the speed image to derive the representative speed norm of the moving object region.

Next, the information processing apparatus 300 checks whether or not an offset in clock time of each of the first imaging apparatus 100 and the second imaging apparatus 200 is adjusted (i.e., whether or not the clock times are synchronized) (S103). In a case where the offset in clock time is adjusted (S103/Yes), Step S104 to Step S108 are skipped. Then, the model integrator 340 restores point cloud data from the depth image acquired by each of the first imaging apparatus 100 and the second imaging apparatus 200 and synthesizes the restored point cloud data (S109). The model integrator 340 is thus able to generate the point cloud data with a higher accuracy.

It may be regularly determined whether or not the offset in clock time is adjusted in Step S103 on the basis of whether or not a cost of the offset in clock time between the moving object regions corresponding to each other becomes equal to or more than a threshold. Specifically, in a case where a cross-correlation between the moving object regions becomes equal to or less than a predetermined value, the moving object regions including moving objects with speed changes equal to or more than a certain level in directions orthogonal to neither of the line-of-sight directions of the first imaging apparatus 100 and the second imaging apparatus 200, the cost of the offset in clock time may be determined to be equal to or more than the threshold. In such a case, the information processing apparatus 300 may determine that the offset in clock time of each of the first imaging apparatus 100 and the second imaging apparatus 200 is not adjusted and perform operations in Step S104 to Step S108 below.

In contrast, in a case where the offset in clock time is not adjusted (S103/No), the relative attitude detector 310 derives the relative attitudes of the first imaging apparatus 100 and the second imaging apparatus 200 on the basis of a correspondence relation between the respective motionless object regions of the first imaging apparatus 100 and the second imaging apparatus 200 (S104). Specifically, the relative attitude detector 310 derives the relative attitudes of the imaging apparatuses on the basis of the coordinates and depths of corresponding ones of the respective feature points of the captured images and respective camera parameters or the like of the first imaging apparatus 100 and the second imaging apparatus 200.

Next, the viewpoint transformation processor 320 transforms a representative speed norm of the moving object region in the viewpoint of the second imaging apparatus 200 into a representative speed norm of the moving object region in the viewpoint of the first imaging apparatus 100 (S105). Specifically, the viewpoint transformation processor 320 transforms the representative speed norm in the viewpoint of the second imaging apparatus 200 into the representative speed norm in the viewpoint of the first imaging apparatus 100 with use of the relative attitudes of the first imaging apparatus 100 and the second imaging apparatus 200.

Subsequently, the clock-time corrector 330 derives an offset in clock time providing the highest cross-correlation by comparing the representative speed norm of the second imaging apparatus 200 that is transformed as viewed from the viewpoint of the first imaging apparatus 100 and the representative speed norm as viewed from the viewpoint of the first imaging apparatus 100 in terms of change with time (S106). Specifically, the clock-time corrector 330 compares, in the moving object regions corresponding to each other, the representative speed norm acquired by the second imaging apparatus 200 and transformed as viewed from the viewpoint of the first imaging apparatus 100 and the representative speed norm acquired by the first imaging apparatus 100. Then, the clock-time corrector 330 derives an offset in clock time providing the highest cross-correlation between the representative speed norms in the moving object regions corresponding to each other.

Next, the clock-time corrector 330 corrects the offset in clock time of each of the captured images with use of the derived offset in clock time (S107). In addition, the clock-time corrector 330 synchronizes the clock times of the first imaging apparatus 100 and the second imaging apparatus 200 by applying the derived offset in clock time to each of the first imaging apparatus 100 and the second imaging apparatus 200.

Subsequently, the model integrator 340 corrects clock times of the depth image and the speed image acquired by each of the first imaging apparatus 100 and the second imaging apparatus 200 with use of the derived offset in clock time (S108). Then, the model integrator 340 restores point cloud data from the depth image acquired by each of the first imaging apparatus 100 and the second imaging apparatus 200 and synthesizes the restored point cloud data (S109). The model integrator 340 is thus able to generate the point cloud data with a higher accuracy.

The above is the description on the example of the operation of the information processing system 3 according to the present embodiment.

It should be noted that, in a case where a plurality of moving objects is included in a captured image, the information processing system 3 may derive respective offsets in clock time for the plurality of moving object regions. Then, the information processing system 3 may select, from among the derived offsets in clock time, one providing the highest cross-correlation and a large change of a cross-correlation coefficient with a change of the clock time as an offset in clock time between the first imaging apparatus 100 and the second imaging apparatus 200. Alternatively, the information processing system 3 may determine an offset in clock time between the first imaging apparatus 100 and the second imaging apparatus 200 by performing optimization by a method of least squares or the like with use of the derived plurality of offsets in clock time.

<3. Second Embodiment>

(3.1. Configuration Example)

Now, referring to FIG. 13, description will be made on an information processing system according to a second embodiment of the present disclosure. FIG. 13 is a block diagram illustrating a functional configuration of an information processing system 4 according to the second embodiment of the present disclosure.

The information processing system 4 according to the second embodiment is different from the information processing system 3 according to the first embodiment in that each of the first imaging apparatus 100 and the second imaging apparatus 200 is not fixed but movable. Accordingly, the information processing system 4 according to the second embodiment causes each of the first imaging apparatus 100 and the second imaging apparatus 200 to perform self-location estimation and causes the information processing apparatus 300 to detect a relative attitude on the basis of an estimated self-location.

Description will be made below merely on distinguishable components of the second embodiment, and description on components similar to those of the first embodiment is omitted.

The first imaging apparatus 100 further includes a self-location estimator 170 in addition to the components described in the first embodiment. Likewise, the second imaging apparatus 200 further includes a self-location estimator 270 in addition to the components described in the first embodiment.

The self-location estimator 170 may estimate the self-location of the first imaging apparatus 100 by image-recognition of a captured image using a CNN. Alternatively, the self-location estimator 170 may estimate the self-location of the first imaging apparatus 100 with use of a device usable for a typical self-location estimation, such as an IMU (Inertial Measurement Unit) or a GNSS (Global Navigation Satellite System) sensor, mounted in the first imaging apparatus 100. Further, the self-location estimator 170 may estimate the self-location of the first imaging apparatus 100 by compositely using at least one or more of the captured images, depth image, speed image, and information acquired by the IMU, or information acquired by the GNSS sensor.

The moving object processor 160 averages, in a moving object region of the speed image, a speed measured within the moving object region to derive a representative speed norm of the moving object region as described in the first embodiment. Incidentally, the derived representative speed norm includes a speed norm of the first imaging apparatus 100. Accordingly, the moving object processor 160 derives an actual representative speed norm of the moving object region by subtracting the speed norm of the first imaging apparatus 100 from the representative speed norm of the moving object region.

In more details, the moving object processor 160 performs a calculation as follows, which makes it possible to derive the speed of the moving object included in the moving object region even though the imaging apparatus moves.

For example, referring to FIG. 8, in a case where only the imaging apparatus moves, a relational expression of the speed of the imaging apparatus is represented by an equation of motion of Expression 3 below (incidentally, v is a translation speed of the imaging apparatus, and $\omega$ is an angular speed of the imaging apparatus). It should be noted that the ranging apparatus is assumed to be mounted in the imaging apparatus with alignment of rotation centers thereof for the purpose of simplification.

[Math. 3]

$$(\text{Expression 3})$$

$$\boldsymbol{v}_{c,i} = \boldsymbol{v} + \boldsymbol{\omega} \times \boldsymbol{R}_i$$

In a case where a subject further moves, a speed component ($v_{w,i}$) attributed to the movement of the subject is added to a right-hand side in Expression 3 above, and the relational expression of the speed of the imaging apparatus is represented by an equation of motion of Expression 4 below, accordingly.

[Math. 4]

$$(\text{Expression 4})$$

$$\boldsymbol{v}_{c,i} = (\boldsymbol{v} + \boldsymbol{\omega} \times \boldsymbol{R}_i) + \boldsymbol{v}_{w,i}$$

The ranging apparatus mounted in the imaging apparatus detects only a speed component in a line-of-sight direction of the ranging apparatus among $v_{c,i}$ described above. Since $v$ and $\omega$ are estimated by the self-location estimators 170 and 270, it is possible to derive the speed of $v_{w,i}$ in the line-of-sight direction of the ranging apparatus by subtracting the speed component in the line-of-sight direction of the ranging apparatus from the speed acquired by the ranging apparatus mounted in the imaging apparatus. In addition, it is possible to derive a direction of $v_{w,i}$ from a representative coordinate and a depth of a moving object region, a representative coordinate and a depth of the moving object region in the next frame, and a position and an attitude of the imaging apparatus. Thus, the moving object processor 160 is able to derive a speed norm of $v_{w,i}$ even though the imaging apparatus moves.

The relative attitude detector 310 may derive the relative attitudes from a difference between the estimated self-locations of the first imaging apparatus 100 and the second imaging apparatus 200. In the second embodiment, the first imaging apparatus 100 and the second imaging apparatus 200 are movable. Thus, it would be difficult for the relative attitude detector 310 to detect corresponding motionless object regions from respective captured images acquired by the first imaging apparatus 100 and the second imaging apparatus 200. Accordingly, the relative attitude detector 310 may derive the relative attitudes from a difference between the own estimated positions of the first imaging apparatus 100 and the second imaging apparatus 200 in place of a positional relation between motionless object regions corresponding to each other.

For example, with use of a constant indicated in FIG. 8, the relative attitudes and relative positions of the first imaging apparatus 100 and the second imaging apparatus 200 are allowed to be represented by Expression Group 5 below.

[Math. 5]

$$\text{(Expression Group 5)}$$

$$P_B^A = (M_A^W)^T (P_B^W - P_A^W) \quad : \text{Relative Position (3D Vector)}$$

$$M_B^A = (M_A^W)^T M_B^W \quad : \text{Relative Attitude (Rotation Matrix)}$$

Incidentally, in a case where corresponding motionless object regions are to be detected from respective captured images acquired by the first imaging apparatus 100 and the second imaging apparatus 200, the relative attitude detector 310 may derive the relative attitudes of the first imaging apparatus 100 and the second imaging apparatus 200 on the basis of coordinates of feature points of the motionless object regions and a correspondence relation in depth between the feature points. Alternatively, the relative attitude detector 310 may derive the relative attitudes of the first imaging apparatus 100 and the second imaging apparatus 200 by further combining a difference between the estimated self-locations. In such a case, the relative attitude detector 310 is able to further enhance an accuracy of a relation between the relative attitudes of the first imaging apparatus 100 and the second imaging apparatus 200 by applying a Loop Closure process, a Pose Graph Optimization process, or a Bundle Adjust process.

The model integrator 340 restores point cloud data from the depth image by further correcting changes of the positions and attitudes of the first imaging apparatus 100 and the second imaging apparatus 200 in addition to the components described in the first embodiment. In the second embodiment, the first imaging apparatus 100 and the second imaging apparatus 200 are movable. Accordingly, the model integrator 340 reflects a movement corresponding to an offset in clock time between the first imaging apparatus 100 and the second imaging apparatus 200 in the depth image and then restores point cloud data.

Specifically, the model integrator 340 selects a clock time closest to a clock time when the first imaging apparatus 100 performs imaging from among depth images acquired by the second imaging apparatus 200 and corrects a depth image at the selected clock time with a change corresponding to a difference in clock time. Next, the model integrator 340 reflects a movement of the second imaging apparatus 200 corresponding to the difference in clock time in the corrected depth image. Then, the model integrator 340 synthesizes point cloud data restored from the depth image acquired by the first imaging apparatus 100 and corrected point cloud data acquired by the second imaging apparatus 200.

The information processing system 3 according to the present embodiment is able to synchronize, for example, clock times of a plurality of movable imaging apparatuses and thus able to acquire synchronized moving images, point cloud data moving images, and three-dimensional surface moving images as viewed from a larger number of viewpoints.

(3.2. Operation Example)

Now, referring to FIG. 14, description will be made on an operation example of the information processing system 4 according to the present embodiment. FIG. 14 is a flowchart for explaining an example of an operation of the information processing system 4 according to the present embodiment. Description will be made below by taking as an example a case where the information processing apparatus 300 synchronizes the clock time of the second imaging apparatus 200 with the clock time of the first imaging apparatus 100.

As illustrated in FIG. 14, the recognizers 130 and 230 and the determiners 140 and 240 individually recognize moving object regions and motionless object regions from captured images, depth images, and speed images acquired by each of the first imaging apparatus 100 and the second imaging apparatus 200 (S201). Specifically, the recognizers 130 and 230 individually recognize regions including objects from respective captured images, depth images, and speed images acquired by the first imaging apparatus 100 and the second imaging apparatus 200. Subsequently, the determiners 140 and 240 each determine whether the recognized region is a moving object region including a moving object or a motionless object region including a motionless object.

Next, the self-location estimators 170 and 270 individually derive respective self-locations of the first imaging apparatus 100 and the second imaging apparatus 200 with use of the captured images, the depth images, the speed images, and position information acquired by an IMU or a GNSS sensor (S202). In addition, the self-location estimators 170 and 270 individually derive respective speeds of the first imaging apparatus 100 and the second imaging apparatus 200 on the basis of changes of the self-locations.

Subsequently, the moving object processors 160 and 260 each derive a representative speed norm of the moving object region (S203). Specifically, the moving object processors 160 and 260 each average a speed measured within the moving object region in the speed image to derive the representative speed norm of the moving object region. Further, the moving object processors 160 and 260 each derive an actual representative speed norm of the moving object region by subtracting the speed component of the imaging apparatus from the derived representative speed norm of the moving object region (204).

Next, the information processing apparatus 300 checks whether or not an offset in clock time of each of the first imaging apparatus 100 and the second imaging apparatus 200 are adjusted (i.e., whether or not the clock times are synchronized) (S205). In a case where the offset in clock time is adjusted (S205/Yes), Step S206 to Step S210 are skipped. Then, the model integrator 340 restores point cloud data from the depth image acquired by each of the first imaging apparatus 100 and the second imaging apparatus 200 and synthesizes the restored point cloud data (S211).

In contrast, in a case where the offset in clock time is not adjusted (S205/No), the relative attitude detector 310 derives the relative attitudes of the first imaging apparatus 100 and the second imaging apparatus 200 on the basis of the respective estimated self-locations of the first imaging apparatus 100 and the second imaging apparatus 200 (S206).

Next, the perspective transformation processor 320 transforms a representative speed norm of the moving object region in the viewpoint of the second imaging apparatus 200 into a representative speed norm of the moving object region in the viewpoint of the first imaging apparatus 100 (S207). Specifically, the viewpoint transformation processor 320 transforms the representative speed norm in the viewpoint of the second imaging apparatus 200 into the representative speed norm in the viewpoint of the first imaging apparatus 100 with use of the relative attitudes of the first imaging apparatus 100 and the second imaging apparatus 200.

Subsequently, the clock-time corrector 330 derives an offset in clock time providing the highest cross-correlation by comparing the representative speed norm of the second imaging apparatus 200 that is transformed as viewed from the viewpoint of the first imaging apparatus 100 and the representative speed norm as viewed from the viewpoint of the first imaging apparatus 100 in terms of change with time (S208). Specifically, the clock-time corrector 330 compares, in the moving object regions corresponding to each other, the representative speed norm acquired by the second imaging apparatus 200 and transformed as viewed from the viewpoint of the first imaging apparatus 100 and the representative speed norm acquired by the first imaging apparatus 100. Then, the clock-time corrector 330 derives an offset in clock time providing the highest cross-correlation between the representative speed norms in the moving object regions corresponding to each other.

Next, the clock-time corrector 330 corrects the offset in clock time of each of the captured images with use of the derived offset in clock time (S209). In addition, the clock-time corrector 330 synchronizes the clock times of the first imaging apparatus 100 and the second imaging apparatus 200 by applying the derived offset in clock time to each of the first imaging apparatus 100 and the second imaging apparatus 200.

Subsequently, the model integrator 340 corrects clock times of the depth image and the speed image acquired by each of the first imaging apparatus 100 and the second imaging apparatus 200 with use of the derived offset in clock time (S209). Further, the model integrator 340 corrects the corrected depth image according to changes of the position and attitude with a movement of each of the first imaging apparatus 100 and the second imaging apparatus 200. Then, the model integrator 340 restores point cloud data from the depth image and synthesizes the restored point cloud data (S211). The model integrator 340 is thus able to generate the point cloud data with a higher accuracy.

The above is the description on the example of the operation of the information processing system 4 according to the present embodiment.

<4. Hardware>

Further, referring to FIG. 15, description will be made on hardware of the information processing apparatus 300 according to the present embodiment. FIG. 15 is a block diagram illustrating a configuration example of a computer apparatus 900 that is the hardware of the information processing apparatus 300 according to the present embodiment.

A function of the information processing apparatus 300 according to the present embodiment may be implemented by a cooperation of software and the later-described hardware (the computer apparatus 900). For example, functions of the relative attitude detector 310, the viewpoint transformation processor 320, the clock-time corrector 330, and the model integrator 340 may be executed by, for example, a CPU 901.

As illustrated in FIG. 15, the computer apparatus 900 includes the CPU (Central Processing Unit) 901, an ROM (Read Only Memory) 903, and an RAM (Random Access Memory) 905.

In addition, the computer apparatus 900 may further include a host bus 907, a bridge 909, an external bus 911, an interface 913, an input apparatus 915, an output apparatus 917, a storage apparatus 919, a drive 921, a connection port 923, or a communication apparatus 925. Further, the computer apparatus 900 may include a processing circuit such as a DSP (Digital Signal Processor) or an ASIC (Application Specific Integrated Circuit) in place of the CPU 901 or along with the CPU 901.

The CPU 901 functions as a computing apparatus or a control apparatus and controls an operation within the computer apparatus 900 in line with a variety of programs recorded in the ROM 903, the RAM 905, the storage apparatus 919, or a removable recording medium 927. The ROM 903 stores a program and a calculation parameter that are to be used by the CPU 901. The RAM 905 temporarily stores a program that is to be used for execution of the CPU 901 and a parameter that is to be used during the execution.

The CPU 901, the ROM 903, and the RAM 905 are connected to each other through the host bus 907 that allows for a high-speed data transmission. The host bus 907 is connected to the external bus 911 such as a PCI (Peripheral Component Interconnect/Interface) via the bridge 909, and the external bus 911 is connected to a variety of components via the interface 913.

The input apparatus 915 is an apparatus that receives a user input from, for example, a mouse, a keyboard, a touch panel, a button, a switch, a lever, or the like. It should be noted that the input apparatus 915 may be a microphone that detects a user voice, or the like. The input apparatus 915 may be, for example, a remote control apparatus with use of infrared light or any other electric wave or may be external connection equipment 929 corresponding to operation of the computer apparatus 900.

The input apparatus 915 further includes an input control circuit that outputs an input signal generated on the basis of information inputted by a user to the CPU 901. The user is allowed to input various data to the computer apparatus 900 or provide instructions for a processing operation by operating the input apparatus 915.

The output apparatus 917 is an apparatus allowed to visually or aurally provide information acquired or generated by the computer apparatus 900 to the user. The output apparatus 917 may be, for example, a display apparatus such as an LCD (Liquid Crystal Display), a PDP (Plasma Display Panel), an OLED (Organic Light Emitting Diode) display, a hologram, or a projector, a sound output apparatus such as a speaker or a headphone, or a printing apparatus such as a printer. The output apparatus 917 is allowed to output information acquired by processing of the computer apparatus 900 as a video picture such as text or image or a sound such as voice or audio.

The storage apparatus 919 is a data storing apparatus configured as an example of a storage of the computer apparatus 900. The storage apparatus 919 may include, for example, a magnetic storage device such as an HDD (Hard Disk Drive), a semiconductor storage device, an optical storage device, a magnetooptical storage device, or the like. The storage apparatus 919 is allowed to store a program that is to be executed by the CPU 901, various types of data, or externally acquired various types of data.

The drive 921, which is a reading/writing apparatus for the removable recording medium 927 such as a magnetic disk, an optical disk, a magnetooptical disk, or a semiconductor memory, is internally mounted in or externally attached to the computer apparatus 900. For example, the drive 921 is allowed to read information recorded in the attached removable recording medium 927 and output the information to the RAM 905. The drive 921 is also allowed to write a record to the attached removable recording medium 927.

The connection port 923 is a port for directly connecting the external connection equipment 929 with the computer apparatus 900. The connection port 923 may be, for example, a USB (Universal Serial Bus) port, an IEEE 1394 port, an SCSI (Small Computer System Interface) port, or the like. Alternatively, the connection port 923 may be an RS-232C port, an optical audio terminal, an HDMI (registered trademark) (High-Definition Multimedia Interface) port, or the like. The connection port 923 is connected to the external connection equipment 929, allowing various types of data to be sent and received between the computer apparatus 900 and the external connection equipment 929.

The communication apparatus 925 is, for example, a communication interface including a communication device or the like for connection to a communication network 931. The communication apparatus 925 may be, for example, a wired or wireless LAN (Local Area Network), Wi-Fi (registered trademark), Bluetooth (registered trademark), a communication card for a WUSB (Wireless USB), or the like. Alternatively, the communication apparatus 925 may be a router for optical communication, a router for ADSL (Asymmetric Digital Subscriber Line), a modem for various communications, or the like.

The communication apparatus 925 is allowed to send and receive a signal or the like to and from, for example, the Internet or another communication apparatus using a predetermined protocol such as TCP/IP. In addition, the communication network 931 connected to the communication apparatus 925, which is a network connected by wire or wirelessly, may be, for example, an internet communication network, an in-home LAN, an infrared communication network, a radio wave communication network, a satellite communication network, or the like.

It should be noted that it is also possible to create a program for causing the computer apparatus 900, which includes the CPU 901, the ROM 903, the RAM 905, and the like mounted in the computer, to fulfill a function equivalent to the above-described information processing apparatus 300. It is also possible to provide a computer-readable recording medium that records the program.

<5. Conclusion>

The technology according to the present disclosure makes it possible to synchronize clock times of a plurality of imaging apparatuses equipped with ranging apparatuses by using a position and a speed of each of points in point cloud data with speed. Therefore, the information processing apparatus 300 according to the present embodiment makes it possible to integrate pieces of point cloud data as viewed from a plurality of viewpoints without the necessity of setting the clock times in advance.

The second embodiment likewise makes it possible to synchronize clock times of a plurality of imaging apparatuses even in a case where at least one or more of the plurality of imaging apparatuses move by estimating a self-location of the moving imaging apparatus. Therefore, the information processing apparatus 300 according to the second embodiment allows point cloud data acquired by the moving imaging apparatus following a dynamically moving subject to be integrated as point cloud data as viewed from another viewpoint.

Further, the technology according to the present disclosure makes it possible to start the ranging apparatus only when a moving object in a captured image acquired by the imaging apparatus appears. In addition, the ranging apparatus is also allowed to cause a region being irradiated with light subjected to frequency continuous modulation to focus on a region including a moving object. In such a case, the information processing systems 3 and 4 are allowed to reduce power consumption and data capacity and acquire pieces of point could data as viewed from a plurality of viewpoints.

In the foregoing, the detailed description is made on the preferred embodiments of the present disclosure with reference to the attached drawings; however, the technical scope of the present disclosure is not limited to these examples. It is obvious that a variety of modification examples or alteration examples may come to a person having common knowledge in the art of the present disclosure, and it should be understood that these, of course, also belong to the technical scope of the present disclosure.

In addition, the effects herein are merely illustrative or exemplary and not limiting. In other words, the technology according to the present disclosure may achieve another effect obvious to those skilled in the art from the description herein in addition to the above-described effects or in place of the above-described effects.

Note that the following configurations belong to the technical scope of the present disclosure.

(1) An information processing apparatus configured to synchronize, on the basis of speed information included in respective pieces of ranging information regarding moving objects corresponding to each other measured by a plurality of imaging apparatuses with use of light subjected to frequency continuous modulation, respective clock times of the plurality of imaging apparatuses.

(2) The information processing apparatus according to (1) above, including:

a viewpoint transformation processor configured to transform the speed information regarding the moving objects corresponding to each other into speed information as viewed from the same viewpoint on the basis of relative attitudes of the plurality of imaging apparatuses; and
a clock-time corrector configured to synchronize the respective clock times of the plurality of imaging apparatuses on the basis of changes with clock time of the speed information as viewed from the same viewpoint regarding the moving objects corresponding to each other.

(3) The information processing apparatus according to (2) above, in which the speed information regarding the moving objects includes representative speed norms of regions including the moving objects.

(4) The information processing apparatus according to (2) or (3) above, in which the viewpoint transformation processor is configured to detect a correspondence relation between the moving objects on the basis of the relative attitudes of the plurality of imaging apparatuses and distances from the imaging apparatuses to the moving objects.

(5) The information processing apparatus according to any one of (2) to (4) above, in which the clock-time corrector is configured to correct an offset in clock time or an offset in cycle of each of the plurality of imaging apparatuses to cause the changes with clock time of the speed information as viewed from the same viewpoint regarding the moving objects corresponding to each other to be same.

(6) The information processing apparatus according to any one of (2) to (5) above, further including:
a relative attitude detector configured to detect the relative attitudes of the plurality of imaging apparatuses on the basis of respective captured images of motionless objects captured by the plurality of imaging apparatuses, the motionless objects corresponding to each other.

(7) The information processing apparatus according to (6) above, in which the relative attitude detector is configured to detect a correspondence relation between the motionless objects on the basis of a correspondence relation between feature points of the motionless objects included in the captured images.

(8) The information processing apparatus according to (7) above, in which the relative attitude detector is configured to detect the relative attitudes of the plurality of imaging apparatuses on the basis of distances from the respective imaging apparatuses of the motionless objects corresponding to each other to the feature points and a correspondence relation between positions of the feature points in the respective captured images.

(9) The information processing apparatus according to any one of (6) to (8) above, in which the moving objects and the motionless objects are determined by image recognition of objects included in the captured images with use of a machine learning model.

(10) The information processing apparatus according to any one of (2) to (5) above, further including:

a relative attitude detector configured to detect the relative attitudes of the plurality of imaging apparatuses on the basis of estimated self-locations of the plurality of imaging apparatuses.

(11) The information processing apparatus according to any one of (2) to (10) above, in which the ranging information includes depth images where information regarding distances from the imaging apparatuses to the moving objects is projected on captured images acquired by the imaging apparatuses.

(12) The information processing apparatus according to (11) above, in which the ranging information includes speed images where information regarding speeds of the moving objects in directions of straight lines connecting the moving objects and the imaging apparatuses is projected on the captured images.

(13) The information processing apparatus according to any one of (1) to (12) above, further including:

a model integrator configured to integrate the respective pieces of ranging information measured by the plurality of imaging apparatuses to each other in clock-time synchronization with each other.

(14) The information processing apparatus according to any one of (1) to (13) above, in which the ranging information includes point cloud data including the speed information.

(15) The information processing apparatus according to any one of (1) to (14) above, in which the light subjected to frequency continuous modulation includes infrared light or near infrared light.

(16) The information processing apparatus according to any one of (1) to (15) above, in which the plurality of imaging apparatuses includes respective imaging elements configured to acquire captured images of the moving objects and respective ranging sensors configured to acquire the ranging information regarding the moving objects.

(17) The information processing apparatus according to (16) above, in which the ranging sensors are configured to acquire the ranging information regarding the moving objects in a case where the moving objects appear in in the captured images.

(18) An information processing method including:

causing a calculation apparatus to synchronize, on the basis of speed information included in respective pieces of ranging information regarding moving objects corresponding to each other measured by a plurality of imaging apparatuses with use of light subjected to frequency continuous modulation, respective clock times of the plurality of imaging apparatuses.

(19) A program for causing a computer to function as an information processing apparatus configured to synchronize, on the basis of speed information included in respective pieces of ranging information regarding moving objects corresponding to each other measured by a plurality of imaging apparatuses with use of light subjected to frequency continuous modulation, respective clock times of the plurality of imaging apparatuses.

[Reference Signs List]

1: Ranging apparatus
2: Subject
3, 4: Information processing system
10: Light source
20: Light splitter
30: Two-dimensional scanner
40: Light mixer
50: Signal processing circuit
100: First imaging apparatus
110, 210: Image processor
120, 220: Ranging processor
130, 230: Recognizer
140, 240: Determiner
150, 250: Motionless object processor
160, 260: Moving object processor
170, 270: Self-location estimator

200: Second imaging apparatus
300: Information processing apparatus
310: Relative attitude detector
320: Viewpoint transformation processor
330: Clock-time corrector
340: Model integrator

**Claims**

1. An information processing apparatus configured to synchronize, on a basis of speed information included in respective pieces of ranging information regarding moving objects corresponding to each other measured by a plurality of imaging apparatuses with use of light subjected to frequency continuous modulation, respective clock times of the plurality of imaging apparatuses.

2. The information processing apparatus according to claim 1, comprising:

   a viewpoint transformation processor configured to transform the speed information regarding the moving objects corresponding to each other into speed information as viewed from a same viewpoint on a basis of relative attitudes of the plurality of imaging apparatuses; and
   a clock-time corrector configured to synchronize the respective clock times of the plurality of imaging apparatuses on a basis of changes with clock time of the speed information as viewed from the same viewpoint regarding the moving objects corresponding to each other.

3. The information processing apparatus according to claim 2, wherein the speed information regarding the moving objects includes representative speed norms of regions including the moving objects.

4. The information processing apparatus according to claim 2, wherein the viewpoint transformation processor is configured to detect a correspondence relation between the moving objects on a basis of the relative attitudes of the plurality of imaging apparatuses and distances from the imaging apparatuses to the moving objects.

5. The information processing apparatus according to claim 2, wherein the clock-time corrector is configured to correct an offset in clock time or an offset in cycle of each of the plurality of imaging apparatuses to cause the changes with clock time of the speed information as viewed from the same viewpoint regarding the moving objects corresponding to each other to be same.

6. The information processing apparatus according to claim 2, further comprising:
   a relative attitude detector configured to detect the relative attitudes of the plurality of imaging apparatuses on a basis of respective captured images of motionless objects captured by the plurality of imaging apparatuses, the motionless objects corresponding to each other.

7. The information processing apparatus according to claim 6, wherein the relative attitude detector is configured to detect a correspondence relation between the motionless objects on a basis of a correspondence relation between feature points of the motionless objects included in the captured images.

8. The information processing apparatus according to claim 7, wherein the relative attitude detector is configured to detect the relative attitudes of the plurality of imaging apparatuses on a basis of distances from the respective imaging apparatuses of the motionless objects corresponding to each other to the feature points and a correspondence relation between positions of the feature points in the respective captured images.

9. The information processing apparatus according to claim 6, wherein the moving objects and the motionless objects are determined by image recognition of objects included in the captured images with use of a machine learning model.

10. The information processing apparatus according to claim 2, further comprising:
    a relative attitude detector configured to detect the relative attitudes of the plurality of imaging apparatuses on a basis of estimated self-locations of the plurality of imaging apparatuses.

11. The information processing apparatus according to claim 2, wherein the ranging information includes depth images where information regarding distances from the imaging apparatuses to the moving objects is projected on captured images acquired by the imaging apparatuses.

12. The information processing apparatus according to claim 11, wherein the ranging information includes speed images where information regarding speeds of the moving objects in directions of straight lines connecting the moving objects and the imaging apparatuses is projected on the captured images.

13. The information processing apparatus according to claim 1, further comprising:
a model integrator configured to integrate the respective pieces of ranging information measured by the plurality of imaging apparatuses to each other in clock-time synchronization with each other.

14. The information processing apparatus according to claim 1, wherein the ranging information includes point cloud data including the speed information.

15. The information processing apparatus according to claim 1, wherein the light subjected to frequency continuous modulation includes infrared light or near infrared light.

16. The information processing apparatus according to claim 1, wherein the plurality of imaging apparatuses includes respective imaging elements configured to acquire captured images of the moving objects and respective ranging sensors configured to acquire the ranging information regarding the moving objects.

17. The information processing apparatus according to claim 16, wherein the ranging sensors are configured to acquire the ranging information regarding the moving objects when the moving objects appear in the captured images.

18. An information processing method comprising:
causing a calculation apparatus to synchronize, on a basis of speed information included in respective pieces of ranging information regarding moving objects corresponding to each other measured by a plurality of imaging apparatuses with use of light subjected to frequency continuous modulation, respective clock times of the plurality of imaging apparatuses.

19. A program for causing a computer to function as an information processing apparatus configured to synchronize, on a basis of speed information included in respective pieces of ranging information regarding moving objects corresponding to each other measured by a plurality of imaging apparatuses with use of light subjected to frequency continuous modulation, respective clock times of the plurality of imaging apparatuses.

# FIG.1

EP 4 311 221 A1

# FIG.2

FREQUENCY

TIME

# FIG.3

FREQUENCY

TIME

$\Delta f_{up}$

$\Delta f_{down}$

# FIG.4

FIRST IMAGING APPARATUS — 100

- IMAGE PROCESSOR — 110
- RANGING PROCESSOR — 120
- RECOGNIZER — 130
- DETERMINER — 140
- MOTIONLESS OBJECT PROCESSOR — 150
- MOVING OBJECT PROCESSOR — 160

SECOND IMAGING APPARATUS — 200

- IMAGE PROCESSOR — 210
- RANGING PROCESSOR — 220
- RECOGNIZER — 230
- DETERMINER — 240
- MOTIONLESS OBJECT PROCESSOR — 250
- MOVING OBJECT PROCESSOR — 260

INFORMATION PROCESSING APPARATUS — 300

- RELATIVE ATTITUDE DETECTOR — 310
- VIEWPOINT TRANSFORMATION PROCESSOR — 320
- CLOCK-TIME CORRECTOR — 330
- MODEL INTEGRATOR — 340

3

# FIG.5

V

V₂

V₁

540

550

510

530

520

211

510A

520

510B

510

111

510

520

520B

520A

FIRST IMAGING
APPARATUS

SECOND IMAGING
APPARATUS

# FIG.6

FIRST IMAGING
APPARATUS

SECOND IMAGING
APPARATUS

FIG.7

V
V₂
V₁
Vₜ

FIRST IMAGING
APPARATUS

SECOND IMAGING
APPARATUS

# FIG.8

# FIG.9

FIG.10

FIG.11

# FIG.12

START

RECOGNIZE MOVING OBJECT REGION AND MOTIONLESS OBJECT REGION FROM EACH OF CAPTURED IMAGES — S101

DERIVE SPEED NORM OF MOVING OBJECT REGION OF EACH OF CAPTURED IMAGES — S102

OFFSET IN CLOCK TIME ADJUSTED? — S103

YES

NO

DERIVE RELATIVE ATTITUDES OF CAPTURED IMAGES FROM CORRESPONDENCE RELATION BETWEEN MOTIONLESS OBJECT REGIONS — S104

TRANSFORM SPEED NORM OF MOVING OBJECT REGION IN VIEWPOINT OF FIRST IMAGING APPARATUS INTO SPEED NORM IN VIEWPOINT OF SECOND IMAGING APPARATUS — S105

COMPARE CHANGES WITH TIME OF CORRESPONDING SPEED NORMS AND DERIVE OFFSET IN CLOCK PROVIDING HIGHEST CROSS-CORRELATION — S106

USING DERIVED OFFSET IN CLOCK TIME, CORRECT CLOCK TIME WHEN EACH OF CAPTURED IMAGES WAS CAPTURED — S107

CORRECT DEPTH IMAGE AND SPEED IMAGE — S108

SYNTHESIZE POINT CLOUD DATA RESTORED FROM DEPTH IMAGE — S109

END

# FIG.13

**FIRST IMAGING APPARATUS** ~100

| | | | |
|---|---|---|---|
| IMAGE PROCESSOR ~110 | RECOGNIZER ~130 | DETERMINER ~140 | MOTIONLESS OBJECT PROCESSOR ~150 |
| RANGING PROCESSOR ~120 | SELF-LOCATION ESTIMATOR ~170 | | MOVING OBJECT PROCESSOR ~160 |

**SECOND IMAGING APPARATUS** ~200

| | | | |
|---|---|---|---|
| IMAGE PROCESSOR ~210 | RECOGNIZER ~230 | DETERMINER ~240 | MOTIONLESS OBJECT PROCESSOR ~250 |
| RANGING PROCESSOR ~220 | SELF-LOCATION ESTIMATOR ~270 | | MOVING OBJECT PROCESSOR ~260 |

INFORMATION PROCESSING APPARATUS ~300

4

- RELATIVE ATTITUDE DETECTOR ~310
- VIEWPOINT TRANSFORMATION PROCESSOR ~320
- CLOCK-TIME CORRECTOR ~330
- MODEL INTEGRATOR ~340

EP 4 311 221 A1

# FIG.14

START

RECOGNIZE MOVING OBJECT REGION AND MOTIONLESS OBJECT REGION FROM EACH OF CAPTURED IMAGES — S201

DERIVE POSITION AND SPEED OF EACH OF IMAGING APPARATUSES BY SELF-LOCATION ESTIMATION — S202

DERIVE SPEED NORM OF MOVING OBJECT REGION OF EACH OF CAPTURED IMAGES — S203

SUBTRACT SPEED COMPONENT OF IMAGING APPARATUS FROM SPEED NORM OF MOVING OBJECT REGION — S204

OFFSET IN CLOCK TIME ADJUSTED? — S205 — YES

NO

DERIVE RELATIVE ATTITUDE FROM SELF-LOCATION OF IMAGING APPARATUS — S206

TRANSFORM SPEED NORM OF MOVING OBJECT REGION IN VIEWPOINT OF FIRST IMAGING APPARATUS INTO SPEED NORM IN VIEWPOINT OF SECOND IMAGING APPARATUS — S207

COMPARE CHANGES WITH TIME OF CORRESPONDING SPEED NORMS AND DERIVE OFFSET IN CLOCK PROVIDING HIGHEST CROSS-CORRELATION — S208

USING DERIVED OFFSET IN CLOCK TIME, CORRECT CLOCK TIME WHEN EACH OF CAPTURED IMAGES WAS CAPTURED — S209

CORRECT DEPTH IMAGE AND SPEED IMAGE — S210

SYNTHESIZE POINT CLOUD DATA RESTORED FROM DEPTH IMAGE — S211

END

# FIG.15

<br>

<div align="center">INTERNATIONAL SEARCH REPORT</div>

| International application No. |
| --- |
| **PCT/JP2021/043868** |

**A. CLASSIFICATION OF SUBJECT MATTER**

*H04N 5/232*(2006.01)i
FI: H04N5/232

According to International Patent Classification (IPC) or to both national classification and IPC

**B. FIELDS SEARCHED**

Minimum documentation searched (classification system followed by classification symbols)

H04N5/232

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | WO 2017/134770 A1 (MITSUBISHI ELECTRIC CORP) 10 August 2017 (2017-08-10) paragraphs [0001]-[0008], [0010]-[0016], [0020], [0023]-[0025], fig. 1-10 | 1, 13-19 |
| A | | 2-12 |
| Y | JP 2011-155477 A (CANON INC) 11 August 2011 (2011-08-11) paragraphs [0001]-[0008], [0021]-[0026], [0034]-[0035], fig. 1-9 | 1, 13-19 |
| A | | 2-12 |
| Y | JP 2019-135446 A (NEC CORP) 15 August 2019 (2019-08-15) paragraphs [0001]-[0002], [0005], [0012]-[0013], [0024] | 1, 13-19 |
| A | | 2-12 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **01 February 2022** | **08 February 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

<div align="center">34</div>

**INTERNATIONAL SEARCH REPORT**
Information on patent family members

International application No.

**PCT/JP2021/043868**

| Patent document cited in search report | | | Publication date (day/month/year) | Patent family member(s) | | | Publication date (day/month/year) |
|---|---|---|---|---|---|---|---|
| WO | 2017/134770 | A1 | 10 August 2017 | (Family: none) | | | |
| JP | 2011-155477 | A | 11 August 2011 | (Family: none) | | | |
| JP | 2019-135446 | A | 15 August 2019 | WO | 2019/151059 | A1 | |

Form PCT/ISA/210 (patent family annex) (January 2015)

**REFERENCES CITED IN THE DESCRIPTION**

**Patent documents cited in the description**

- JP 2019135446 A